Europäisches Patentamt

European Patent Office

Office européen des brevets

(19)

(11) Veröffentlichungsnummer: **0 165 577**
**B1**

(12) **EUROPÄISCHE PATENTSCHRIFT**

(45) Veröffentlichungstag der Patentschrift:
18.01.89

(21) Anmeldenummer: 85107418.7

(22) Anmeldetag: 15.06.85

(51) Int. Cl.⁴: **A 23 K 1/17**, A 23 K 1/175

(54) Zinkbacitracin enthaltender Futtermittelzusatz.

(30) Priorität: 20.06.84 DE 3422782

(43) Veröffentlichungstag der Anmeldung:
27.12.85 Patentblatt 85/52

(45) Bekanntmachung des Hinweises auf die Patenterteilung:
18.01.89 Patentblatt 89/3

(84) Benannte Vertragsstaaten:
AT BE CH DE FR GB IT LI LU NL SE

(56) Entgegenhaltungen:
DE-A- 2 214 329
DE-A- 2 745 035
DE-A- 2 808 803

(73) Patentinhaber: BOEHRINGER INGELHEIM VETMEDICA GMBH, D-6507 Ingelheim/Rhein (DE)

(72) Erfinder: Schmidt, Michael, Dr., Hammergasse 88, D-6507 Ingelheim am Rhein (DE)
Erfinder: Bomann, Werner, Dr., Albrecht-Dürer-Strasse 21, D-6507 Ingelheim am Rhein (DE)
Erfinder: Janott, W., Mühlstrasse 13, D-6507 Ingelheim (DE)
Erfinder: Werner, Herbert, Binger Strasse 228, D-6507 Ingelheim (DE)

ACTORUM AG

**Beschreibung**

Die Erfindung betrifft einen Zinkbacitracin enthaltenden Futtermittelzusatz, der, vermischt mit einem Futtermittel, eine verbesserte Stabilität gegenüber Hitze- und Feuchtigkeitseinwirkung und mechanischer Bearbeitung aufweist, so dass das darin enthaltene Zinkbacitracin auch nach einer längeren Lagerung selbst unter ungünstigen Bedingungen nur einen geringfügigen Anteil seiner Aktivität verliert.

Zinkbacitracin ist ein Leistungsförderer, der als Futtermittelzusatz zur besseren Futterverwertung und damit zur grösseren täglichen Gewichtszunahme bei Tieren dem Futter beigemischt wird. Chemisch gesehen ist Zinkbacitracin ein zyklisches Polypeptid, das in fester und gelöster Form relativ stabil ist. In Futtermischungen ist Zinkbacitracin wesentlich instabiler, wofür zum einen die Einwirkung von Hitze und Feuchtigkeit beim Pelletieren des Futters sowie die mechanische Beanspruchung beim Mischvorgang des Futtermittelzusatz mit dem Futter, zum anderen Reaktionen mit den im Futter vorhandenen Schwermetallen, wie Kupfer und Eisen sowie mit organischen Verbindungen, wie z.B. Ascorbinsäure verantwortlich gemacht werden.

Zur Stabilisierung von Zinkbacitracin in Futtermischungen wurden zahlreiche Anstrengungen unternommen, um die bekannten Nachteile zu vermeiden. Bislang ist es jedoch nicht gelungen, eine auch in der Praxis voll befriedigende Lösung des Problems, der Abnahme des Gehalts an Zinkbacitracin unter normalen und besonders unter ungünstigen Verarbeitungs- und Lagerbedingungen, zu finden, so dass infolge der Unsicherheit über den Gehalt an Zinkbacitracin eine «vorsorgliche» Überdosierung nicht auszuschliessen war.

Die DE-OS 2 745 035 beschreibt ein Verfahren, bei dem Zinkbacitracin aus einer Kulturbrühe ausgefällt, mit z.B. Calciumcarbonat versetzt und sprühgetrocknet wird. Hierbei wird zum einen die gegenüber Bacitracin verbesserte Stabilität der Zinkverbindung ausgenützt, zum anderen durch die Sprühtrocknung ein sehr geringer Wassergehalt des Produktes erhalten.

Der Sprühtrocknung liegt das Prinzip zugrunde, Wasser aus einer Formulierung zu entfernen. Als Nachteil sind die gegenüber anderen Trocknungsverfahren höheren Kosten zu nennen. Ausserdem nehmen getrocknete Produkte die der Adsorptionsisotherme entsprechende Wassermenge sehr schnell wieder auf, so dass alle der Sprühtrocknung folgenden Produktions- und Verpackungsschritte unter feuchtearmen Bedingungen durchgeführt werden müssen.

Es ist die Aufgabe der vorliegenden Erfindung, einen Zinkbacitracin enthaltenden Futtermittelzusatz bereitzustellen, welcher nach Vermischen mit Futter oder beim Pelletieren eine verbesserte Stabilität besitzt und eine längere Lagerhaltung ermöglicht. Dabei sollten zur Herstellung des Präparates übliche Geräte und Maschinen eingesetzt sowie die beschriebenen Nachteile des Standes der Technik vermieden werden. Ausserdem sollte der Futtermittelzusatz in möglichst kleinen Partikeln anfallen, um eine homogene Verteilung im Futter zu ermöglichen.

Die Aufgabe wird erfindungsgemäss dadurch gelöst, dass der Zinkbacitracin enthaltende Futtermittelzusatz mit einem Polymerüberzug versehen ist.

Für eine derartige Einbettung des Futtermittelzusatzes kommen im Prinzip alle Stoffe in Betracht, die einen Überzug über den zu schützenden Stoff bilden können und so auch einen mechanischen Schutz bilden; so z.B.
– Polymere wie Polysaccharide, Polyacrylate
– Fettähnliche Verbindungen, Wachse
– Tenside.

Zu berücksichtigen ist, dass die den Überzug bildenden Stoffe sich unter physiologischen Bedingungen (im Magen, Darm, Pansen der entsprechenden Tierarten) lösen bzw. soweit quellen, dass der Wirkstoff freigesetzt werden kann.

Als bevorzugt erweisen sich hierbei Überzüge aus Polyacrylaten und Polysacchariden, besonders bevorzugt sind Überzüge aus Hydroxypropylmethylcellulose, Hydroxyethylcellulose und Methylcellulose.

Der Anteil des Polymeren beträgt zwischen 1 und 30 Gew.-%, bevorzugt 5–20 Gew.-%, bezogen auf das Ausgangsmaterial, eine Mischung aus 5–40 Gew.-%, bevorzugt 15–25 Gew.-%, Zinkbacitracin und 60–95 Gew.-%, bevorzugt 75–85 Gew.-%, eines Trägerstoffes.

Es ist hierbei selbstverständlich, dass auch bei höheren Polymerkonzentrationen eine Stabilisierung des erfindungsgemässen Futtermittelzusatzes erreicht wird, wobei es jedoch im Rahmen der Erfindung ist, die Polymermenge möglichst gering zu halten.

Der Trägerstoff kann aus 20–80 Gew.-% Fermentationsrest und 20–80 Gew.-% Calciumcarbonat, bevorzugt sind 75 Gew.-% Fermentationsrest und 25 Gew.-% Calciumcarbonat bestehen. Auch andere Trägerstoffe, insbesondere die der futtermittelrechtlichen Vorschriften vom Mai 83, veröffentlicht im Bundesgesetzblatt der BRD, sind verwendbar.

Für die Herstellung des erfindungsgemässen Zinkbacitracins enthaltenden Futtermittels stehen prinzipiell verschiedene Verfahren zur Verfügung.

Das einfachste Verfahren für einen derartigen Überzug mit den Polymeren ist die Feuchtmischung. Dabei wird der zu schützende Stoff mit einer Lösung des Überzugsmaterials intensiv gemischt und granuliert. Nach dem Trocknen des Granulats werden die entstandenen Agglomerate wieder zerkleinert.

Ein weiteres Verfahren ist z.B. die Sprüherstarrung, wobei der zu schützende Stoff in geschmolzenen Materialien eingearbeitet wird. Beim Versprühen bilden sich kleine, kugelförmige Partikel, die beim Abkühlen erstarren.

Bei der Mikroverkapselung wird der zu schützende Stoff nach den literaturbekannten Verfahren mit Polymeren umhüllt. Während gelöste oder flüssige Stoffe relativ einfach zu verkapseln sind, können bei Feststoffen in Abhängigkeit von der Partikelform Probleme dadurch auftreten, dass die Hülle nur unvollständig aufgebracht wird.

Nach dem bevorzugten erfindungsgemässen Verfahren wird der Zinkbacitracin enthaltende Futtermittelzusatz in einem Wirbelschichtgranulierer mit Polymeren umhüllt. Der Futtermittelzusatz, bestehend aus einer Mischung aus 5–40 Gew.-%, bevorzugt 15–25 Gew.-%, Zinkbacitracin und 60–95 Gew.-%, bevorzugt 75–85 Gew.-%, eines Trägerstoffes wird dabei durch einen Luftstrom aufgewirbelt, danach wird das Polymer, bevorzugt Hydroxypropylmethylcellulose, Hydroxyethylcellulose oder Methylcellulose in gelöster Form über eine Düse aufgesprüht.

Zur Herstellung der Polymerlösung können organische und wässrige Lösungsmittel oder Lösungsmittelgemische verwendet werden, soweit sie das Polymer lösen. Gegebenenfalls können auch Suspensionen des Polymers in geeigneten Lösungsmitteln verwendet werden. Bevorzugte Lösungsmittel sind Wasser, Methanol und Dichlormethan oder auch Lösungsmittelgemische, wie z.B. Methanol/Dichlormethan im Verhältnis 1 + 1.

Bei der Auswahl der Lösungsmittel ist wichtig, dass diese einen relativ niedrigen Siedepunkt aufweisen, so dass nach der Verarbeitung keine Lösungsmittelreste in der Futtermischung verbleiben.

Eine möglichst kleine Partikelgrösse des Zinkbacitracin enthaltenden Futtermittelzusatzes ist wünschenswert, um eine gleichmässige Verteilung des Futtermittelzusatzes in der Futtermischung zu gewährleisten.

Die Agglomeratbildung und damit die Partikelgrösse kann über die Sprühgeschwindigkeit gesteuert werden, wobei die Agglomeratbildung mit steigernder Sprühgeschwindigkeit zunimmt.

Der nach dem erfindungsgemässen Verfahren mit einem Polymer überzogene Zinkbacitracin enthaltende Futtermittelzusatz zeichnet sich gegenüber dem unbehandelten Handelsprodukt im Gemisch mit Futtermitteln auch unter ungünstigen Lagerbedingungen bei erhöhten Temperaturen durch eine wesentlich geringe Zersetzung des Zinkbacitracins aus, so dass im Gegensatz zur jetzigen Praxis der Gehalt an Zinkbacitracin in fertigen Futtermischungen auch nach längerer Lagerzeit bestimmbar ist und die vom Gesetzgeber vorgeschriebenen Toleranzen überprüft werden können.

Zusätzliche Vorteile bietet der mit einem Polymerüberzug versehene Futtermittelzusatz durch eine deutlich wahrnehmbare Geruchsverminderung gegenüber dem unbehandelten Produkt und eine wesentlich geringere Staubentwicklung beim Verarbeiten. Der erfindungsgemässe Futtermittelzusatz eignet sich zur Verbesserung der Futterverwertung bei der Tiermast.

DE-A-2 808 803 beschreibt zwar ein Verfahren zum Schutze pulverförmiger Futterkonzentrate durch Überziehen derselben mit Polymeren vor, wobei jedoch nicht die Rede ist von zinkbacitracinhaltigen Mitteln. Auch lässt sich dieser Druckschrift nicht entnehmen, dass durch den Polymerüberzug die Hitzebeständigkeit von Wirkstoffen (wie im vorliegenden Fall) gesteigert werden kann.

Bevorzugte Ausführungsformen des erfindungsgemässen Verfahrens werden im folgenden näher beschrieben.

Beispiel A:

| Ausgangsmaterial: | Zinkbacitracin | 20% |
| | Calciumcarbonat | 20% |
| | Fermentationsrest | 60% |
| Polymerlösung: | Hydroxypropylmethylcellulose, in Form einer wässrigen Lösung (5% bzw. 7%) | |
| Polymermenge: | 5% bzw. 20% bezogen auf das Ausgangsmaterial | |
| Sprühbedingungen: | Gerät: WT 1, Fa. Glatt Sprühgeschwindigkeit: ca. 15 ml/min. Lufttemperatur: ca. 60 °C | |

Das Ausgangsmaterial wird in einem Wirbelschichtgranulierer durch einen Luftstrom aufgewirbelt, danach wird die Hydroxypropylmethylcellulose in gelöster Form über eine Düse aufgesprüht. Der nach dem Beispiel A hergestellte Futtermittelzusatz hatte folgende Korngrössenverteilungen:

Polymermenge 5%:

| Siebgrösse (μm) | Anteil (%) |
| --- | --- |
| < 250 | 8 |
| 250–500 | 32 |
| 500–1000 | 60 |

Polymermenge 20%:

| Siebgrösse (μm) | Anteil (%) |
| --- | --- |
| 250–500 | 6 |
| 500–1000 | 60 |
| > 1000 | 34 |

Wie das folgende Beispiel zeigt, lässt sich durch Einsatz organischer Lösungsmittel (Methanol/Methylenchlorid = 1 + 1) die Kornverteilung bei gleicher Sprühgeschwindigkeit zu kleineren Partikeln verschieben:

Polymermenge 10%:

| Siebgrösse (μm) | Anteil (%) |
| --- | --- |
| < 125 | 30 |
| 125–250 | 20 |
| 250–500 | 35 |
| > 500 | 15 |

Die Zusammensetzung der untersuchten Futtermischungen ist in der folgenden Tabelle I aufgeführt. Der Überzug bei den Rezepturen $R^2$ und $R^3$ wurde entsprechend der bevorzugten Ausführungsform des erfindungsgemässen Verfahrens hergestellt, bei $R^1$ wurde das Ausgangsmaterial nicht behandelt. Die Herstellung der Futtermischungen wurde über 2 Vormischungen in einer Reibschale, die Endmischung im Kubusmischer durchgeführt.

Als Futtermittel wurde Ferkelaufzuchtfutter II (Zusammensetzung gemäss futtermittelrechtlicher Vorschriften vom Mai 1983) eingesetzt, weil bei diesem Futter der Gehalt an Eisen, Kupfer, Mangan und Zink besonders hoch ist.

Tabelle I: Zusammensetzung der untersuchten Futtermischungen (Werte in g):

|  | $R^1$ | $R^2$ | $R^3$ |
|---|---|---|---|
| Zinkbacitracin 20% |  |  |  |
| Calciumcarbonat 20% | 0,25 | 0,25 | 0,25 |
| Fermentationsrest 60% |  |  |  |
| Hydroxypropylmethyl- |  |  |  |
| cellulose | – | 0,0125 | 0,05 |
| Ferkelaufzuchtfutter II | 999,75 | 999,7375 | 999,70 |
|  | 1000,00 | 1000,0000 | 1000,00 |

Stabilitätsergebnisse der Futtermischungen:

Die Muster wurden 4 Wochen bei den Temperaturen RT (Raumtemperatur, ca. 21 °C), 31 °C, 41 °C und 51 °C gelagert und mikrobiologisch untersucht (Amtsblatt der Europ. Gemeinschaften vom 18.01.1984, Nr. L 15/28).

Die Ergebnisse der mikrobiologischen Untersuchungen sind in der folgenden Tabelle II zusammengefasst:

Tabelle II: Restgehalt von Zinkbacitracin in Abhängigkeit von Zusammensetzung und Lagerbedingungen (Werte in %)

| Temperatur (°C) | $R^1$ | $R^2$ | $R^3$ |
|---|---|---|---|
| RT | 90,4 | 96,7 | 96,2 |
| 31 | 52,9 | 70,0 | 81,4 |
| 41 | 21,4 | 60,0 | 59,5 |
| 51 | 7,6 | 46,2 | 59,5 |

Nach diesen Ergebnissen lässt sich in Futter die Stabilisierung von Zinkbacitracin durch Hydroxypropylmethylcellulose ableiten. Gegenüber der mit 5% Polymer besprühten Zusammensetzung R2 ist R3 (20% Polymer) geringfügig besser.

Neben diesen Versuchen unter ungünstigen, erhöhten Lagertemperaturen wurde zusätzlich das Langzeitverhalten von erfindungsgemässen und handelsüblichen Zinkbacitracin enthaltenden Futtermitteln untersucht. Soweit nichts anderes angegeben ist, beträgt die Polymerkonzentration 20% bezogen auf einen Futtermittelzusatz, bestehend aus 20% Zinkbacitracin, 20% Calciumcarbonat und 60% Fermentationsreste.

In der Tabelle III ist der Restgehalt an Zinkbacitracin in einem Alleinfuttermittel für Mastküken (Typ 7.7) mit einer Anfangskonzentration an Zinkbacitracin von 50 ppm nach 1-, 3- und 6-monatiger Lagerung bei verschiedenen Temperaturen aufgeführt.

Um zusätzlich den Einfluss des Pelletierens (Dampfkonditionierung), bei dem die Futtermischung kurzzeitig hohen Temperaturen (bis zu 110 °C) und hoher Feuchtigkeit ausgesetzt ist, zu untersuchen, wurden die Chargen geteilt; eine Hälfte wurde dann pelletiert und anschliessend denselben Lagerbedingungen unterworfen wie die nicht pelletierten Muster. Wie anhand der Versuche R4 bis R7 gezeigt werden konnte, weisen die mit Hydroxypropylmethylcellulose überzogenen Muster (R5 und R7) auch nach längerer Lagerung in jedem Fall einen höheren Gehalt an Zinkbacitracin auf, als die unbehandelten Proben R4 und R6.

Tabelle III: Restgehalt an Zinkbacitracin in einem Alleinfuttermittel für Mastküken (Typ 7.7) mit einem Anfangsgehalt von 50 ppm (Werte in %).

|  | gelagert bei | $R^4$ (unbehandelt) | $R^5$ (HPMC) | $R^6$ (unbehandelt, pelletiert) | $R^7$ (HPMC, pelletiert) |
|---|---|---|---|---|---|
| 1 Monat | RT | – | – | 36 | 65 |
|  | 26 °C | – | – | 24 | 60 |
| 3 Monate | RT | 54 | 93 | 23 | 47 |
|  | 26 °C | 32 | 77 | 8 | 33 |
| 6 Monate | RT | 47 | 95 | 17 | 47 |
|  | 26 °C | – | 73 | – | 20 |

HPMC = Hydroxypropylmethylcellulose
RT = Raumtemperatur 21 °C

Tabelle IV: Restgehalt an Zinkbacitracin in einem Alleinfuttermittel für Mastschweine (Typ 2.6) mit einem Anfangsgehalt von 20 ppm (Werte in %).

| | gelagert | $R^8$ (unbe-handelt) | $R^9$ (unbehan-delt, pelle-tiert) | $R^{10}$ (HPMC) | $R^{11}$ (HPMC, pelletiert) |
|---|---|---|---|---|---|
| Anfangs-wert | | 100 | 66 | 100 | 100 |
| 6 Monate | RT | 79 | 52 | 100 | 73 |

Wie ein Vergleich der Anfangswerte der Versuche $R^8$–$R^{11}$ in der Tabelle IV zeigt, beträgt der Aktivitätsverlust des Zinkbacitracins bei einer nichtbehandelten Probe ($R^8$ und $R^9$) bereits beim Pelletieren etwa 30%, im Gegensatz dazu zeigt das mit Hydroxypropylmethylcellulose überzogene Muster $R^{10}$ keinen messbaren Aktivitätsverlust durch das Pelletieren ($R^{11}$). Auch nach 6-monatiger Lagerung weist der erfindungsgemässe Futtermittelzusatz eine höhere Aktivität an Zinkbacitracin auf, als der unbehandelte.

Tabelle V: Restgehalt an Zinkbacitracin in einem Alleinfuttermittel für Legehennen (Typ 7.4) bei einer Anfangskonzentration von 100 ppm Zinkbacitracin nach 6-monatiger Lagerung (Werte in %).

| | gelagert bei | $R^{12}$ (unbe-handelt) | $R^{13}$ (unbehan-delt, pelle-tiert) | $R^{14}$ (HPMC) | $R^{15}$ (HPMC, pelletiert) |
|---|---|---|---|---|---|
| 6 Monate | RT | 77 | 28 | 100 | 70 |
| | 26 °C | – | – | 96 | 58 |
| | 31 °C | – | – | 88 | 42 |

In einer weiteren Versuchsanmeldung wurde unbehandelter wie auch mit Hydroxypropylmethylcellulose (HPMC), Methylcellulose (MC) und Hydroxypropylcellulose (HPC) überzogener Zinkbacitracin enthaltender Futtermittelzusatz bei 60%-Luftfeuchtigkeit für 4 Wochen bei 21 °C in Glas- und Polyethylengefässen (PE) gelagert. In dieser Versuchsreihe wurde die Polymerkonzentration zwischen 10 und 20% variiert.

Die Ergebnisse sind in Tab. VI zusammengefasst.

Tab. VI: Restgehalt an Zinkbacitracin in einem Alleinfuttermittel für Mastküken (Typ 7.7) mit einem Anfangsgehalt von 50 ppm (Werte in %):

| Versuch | Polymer | | Anfangswert (nicht pelletiert) | Anfangswert (pelletiert) | (nicht pelletiert) | | (pelletiert) | |
|---|---|---|---|---|---|---|---|---|
| | | | | | Glas | PE | Glas | PE |
| $R^{16}$ | unbehandelt | | 77 | 68 | 48 | 41 | 19 | 24 |
| $R^{17}$ | HPMC | 10% | 100 | 94 | 80 | 94 | 53 | 60 |
| $R^{18}$ | HPMC | 15% | 97 | 85 | 79 | 96 | 61 | 69 |
| $R^{19}$ | HPMC | 20% | 96 | 82 | 77 | 97 | 70 | 73 |
| $R^{20}$ | MC | 10% | 96 | 80 | 93 | 92 | 63 | 68 |
| $R^{21}$ | MC | 20% | 100 | 82 | 73 | 93 | 84 | 67 |
| $R^{22}$ | HPC | 10% | 95 | 85 | 92 | 74 | 54 | 51 |
| $R^{23}$ | HPC | 15% | 99 | 86 | 88 | 90 | 64 | 55 |
| $R^{24}$ | HPC | 20% | 99 | 81 | 93 | 84 | 65 | 54 |

In der Tab. VII sind die 4 Wochenwerte eines mit einem Polyacrylat überzogenen Futtermittelzusatzes zusammengefasst. Der Polymeranteil betrug 30%.

Tab. VII: Restgehalt an Zinkbacitracin in einem Ferkelaufzuchtfutter II mit einem Anfangsgehalt von 50 ppm (Werte in %):

| Temperatur (°C) | $R^{25}$ (30% Eudragit E 100) 4 Wochen |
|---|---|
| 21 °C | 71 |
| 31 °C | 63 |
| 41 °C | 47 |

Anhand der beschriebenen Beispiele kann die Stabilisierung von Zinkbacitracin in Futtermischungen durch die erfindungsgemässen Überzüge im Vergleich zu nichtbehandelten Futtermittelzusätzen nachgewiesen werden.

Beispiel für die Herstellung eines erfindungsgemässen Futtermittelzusatzes nach dem bevorzugten Verfahren.

Beispiel B:
Ansatz: 240 kg:

200 kg Futtermittelzusatz, bestehend aus 20% Zinkbacitracin, 20% $CaCO_3$ und 60% Fermentationsresten, werden in einen Wirbelschichtgranulator (Typ WSG 200 d. Fa. Glatt, ausgestattet mit einer Hubkolbenpumpe, Typ HL 1L der Fa. Lewa) mit einer Lösung von 40,0 kg Hydroxypropylmethylcellulose in 531,42 l gereinigtem Wasser besprüht. Anschliessend werden 3 l gereinigtes Wasser nachgesprüht. Nach Beendigung der Sprühung wird die Luftheizung abgeschaltet und bis zu einer Gutstemperatur von 45 °C abgekühlt.

Sprühbedingungen:
Luftmenge, Sprühung:    1000–5000 m³/h
Lufttemperatur, Sprühung: ca. 100 °C
Sprühgeschwindigkeit:    ca. 1600 ml/min.
Sprühdüse:    1,2 mm (6-fach)
Überdruck Sprühluft:    Pe = ca. 4 bar
Luftmenge, Abkühlphase: ca. 5000 m³/h

Das Filter wurde alle 90 Sekunden für 5 Sekunden gerüttelt.

Zu Beginn der Sprühung liegt der Futtermittelzusatz als feines, kompaktes Pulver vor, welches sich im Verlauf der Sprühphase zu einem leichten lockeren Granulat ausbildet. Die Granulatbildung und dadurch bedingte starke Volumenvergrösserung muss bei der Ansatzgrösse berücksichtigt werden. Daher muss auch die Sprühung mit einer relativ kleinen Luftmenge begonnen werden und während der Sprühphase mit zunehmender Granulatbildung erhöht werden.

Nach erfolgter Sprühung wird das Granulat in einem Siebgranulator der Fa. Frewitt mit einem Siebeinsatz von 1,0 mm Maschenweite (rotierend, mittlere Geschwindigkeit) gesiebt und anschliessend 100 Minuten in einem Drehspiessmischer der Fa. Lermer gemischt.

## Patentansprüche

1. Zinkbacitracin enthaltender Futtermittelzusatz mit verbesserter Stabilität bei Hitze- und Feuchtigkeitseinwirkung und mechanischer Bearbeitung, dadurch gekennzeichnet, dass der Futtermittelzusatz mit einem Polymer überzogen ist.

2. Futtermittelzusatz nach Anspruch 1, dadurch gekennzeichnet, dass er ohne den Polymeranteil aus 5 bis 40% Zinkbacitracin und 60 bis 95% eines Trägerstoffes, bevorzugt 15–25% Zinkbacitracin und 75–85% eines Trägerstoffes, besteht.

3. Futtermittelzusatz nach Anspruch 2, dadurch gekennzeichnet, dass der Trägerstoff aus 20–80 Gew.-% Fermentationsreste und 20–80 Gew.-% Calciumcarbonat besteht, bevorzugt 75 Gew.-% Fermentationsreste und 25 Gew.-% Calciumcarbonat.

4. Futtermittelzusatz nach Anspruch 1, dadurch gekennzeichnet, dass der Polymerüberzug entweder aus Hydroxypropylmethylcellulose, Hydroxyethylcellulose oder Methylcellulose besteht.

5. Futtermittelzusatz nach Anspruch 1, dadurch gekennzeichnet, dass der Polymerüberzug aus einem Polyacrylat besteht.

6. Futtermittelzusatz nach den Ansprüchen 1 bis 5, dadurch gekennzeichnet, dass der Polymeranteil 1 bis 30%, bevorzugt 5 bis 20%, bezogen auf das Ausgangsmaterial, beträgt.

7. Verfahren zur Herstellung eines Zinkbacitracin enthaltenden Futtermittelzusatzes mit verbesserter Stabilität bei Hitze- und Feuchtigkeitseinwirkung und mechanischer Bearbeitung, dadurch gekennzeichnet, dass der Futtermittelzusatz mit einem Polymer überzogen wird.

8. Verfahren nach Anspruch 7, dadurch gekennzeichnet, dass der Futtermittelzusatz in einem Wirbelschichtgranulierer mit einem Polymer überzogen wird.

9. Verfahren nach den Ansprüchen 7 und 8, dadurch gekennzeichnet, dass der Futtermittelzusatz entweder mit Hydroxypropylmethylcellulose, Hydroxyethylcellulose oder Methylcellulose überzogen wird.

10. Verfahren nach den Ansprüchen 7 bis 9, dadurch gekennzeichnet, dass das Polymer als 1- bis 12%ige, bevorzugt 5- bis 7%ige, Lösung oder Suspension aufgebracht wird.

11. Verfahren nach den Ansprüchen 7 bis 10, dadurch gekennzeichnet, dass 1 bis 30%, bevorzugt 5 bis 20% des Polymers, bezogen auf das Ausgangsmaterial, aufgebracht werden.

12. Verfahren nach den Ansprüchen 7 bis 11, dadurch gekennzeichnet, dass der mit einem Polymer zu überziehende Futtermittelzusatz aus 5–40 Gew.-% Zinkbacitracin und 60–95 Gew.-% eines Trägerstoffes, bevorzugt 15–25 Gew.-% Zinkbacitracin und 75–85 Gew.-% eines Trägerstoffes besteht.

13. Verwendung eines Futtermittelzusatzes nach den Ansprüchen 1 und 7 zur Verbesserung der Futterverwertung bei der Tiermast.

14. Verwendung eines mit einem Polymerüberzug versehenen Zinkbacitracinpräparats nach Anspruch 1 und 7 als Futtermittelzusatz.

## Claims

1. Feed additive containing zinc bacitracin with improved stability under the action of heat and moisture and mechanical processing, characterised in that the feed additive is coated with a polymer.

2. Feed additive as claimed in claim 1, characterised in that, without the polymer content, it consists of 5 to 40% of zinc bacitracin and 60 to 95% of a carrier, preferably 15–25% of zinc bacitracin and 75–85% of a carrier.

3. Feed additive as claimed in claim 2, characterised in that the carrier consists of 20–80% by weight of fermentation residue and 20–80% by weight of calcium carbonate, preferably 75% by weight of fermentation residues and 25% by weight of calcium carbonate.

4. Feed additive as claimed in claim 1, characterised in that the polymer coating consists either of hydroxypropylmethyl cellulose, hydroxyethyl cellulose or methyl cellulose.

5. Feed additive as claimed in claim 1, characterised in that the polymer coating consists of a polyacrylate.

6. Feed additive as claimed in claims 1 to 5, characterised in that the polymer content is from 1 to 30%, preferably 5 to 20%, based on the starting material.

7. Process for preparing a feed additive containing zinc bacitracin with improved stability under the effect of heat and moisture and mechanical processing, characterised in that the feed additive is coated with a polymer.

8. Process as claimed in claim 7, characterised in that the feed additive is coated with a polymer in a fluidised bed granulator.

9. Process as claimed in claims 7 and 8, characterised in that the feed additive is coated with hydroxypropylmethyl cellulose, hydroxyethyl cellulose or methyl cellulose.

10. Process as claimed in claims 7 to 9, characterised in that the polymer is applied in the form of a 1 to 12%, preferably 5 to 7%, solution or suspension.

11. Process as claimed in claims 7 to 10, characterised in that 1 to 30%, preferably 5 to 20%, of the polymer are applied, based on the starting material.

12. Process as claimed in claims 7 to 11, characterised in that the feed additive which is to be coated with a polymer consists of 5–40% by weight of zinc bacitracin and 60–95% by weight of a carrier, preferably 15–25% by weight of zinc bacitracin and 75–85% by weight of a carrier.

13. Use of a feed additive as claimed in claims 1 and 7 for improving the utilisation of fodder in fattening animals.

14. Use of a zinc bacitracin preparation having a polymer coating as claimed in claims 1 and 7 as a feed additive.

### Revendications

1. Additif alimentaire pour animaux contenant de la bacitracine de zinc, doué d'une stabilité améliorée sous l'action de la chaleur et de l'humidité et du traitement mécanique, caractérisé en ce que l'additif alimentaire pour animaux est enrobé d'un polymère.

2. Additif alimentaire pour animaux selon la revendication 1, caractérisé en ce qu'il est constitué, en dehors de la fraction de polymère, par 5 à 40% de bacitracine de zinc et 60 à 95% d'une substance support, de préférence par 15 à 25% de bacitracine de zinc et 75 à 85% d'une substance vectrice.

3. Additif alimentaire pour animaux selon la revendication 2, caractérisé en ce que la substance support est constituée par 20 à 80% en poids de résidus de fermentation et 20 à 80% en poids de carbonate de calcium, de préférence par 75% en poids de résidus de fermentation et 25% en poids de carbonate de calcium.

4. Additif alimentaire pour animaux selon la revendication 1, caractérisé en ce que l'enrobage de polymère est constitué par de l'hydroxypropylméthylcellulose, de l'hydroxyéthylcellulose ou de la méthylcellulose.

5. Additif alimentaire pour animaux selon la revendication 1, caractérisé en ce que l'enrobage de polymère est constitué par un polyacrylate.

6. Additif alimentaire pour animaux selon les revendications 1 à 5, caractérisé en ce que la fraction de polymère est de 1 à 30%, de préférence de 5 à 20%, par rapport à la matière de départ.

7. Procédé de préparation d'un additif alimentaire pour animaux contenant de la bacitracine de zinc, doué d'une stabilité améliorée sous l'action de la chaleur et de l'humidité et du traitement mécanique, caractérisé en ce que l'additif alimentaire pour animaux est enrobé d'un polymère.

8. Procédé selon la revendication 7, caractérisé en ce que l'additif alimentaire pour animaux est enrobé d'un polymère dans un granulateur à lit fluidisé.

9. Procédé selon les revendications 7 et 8, caractérisé en ce que l'additif alimentaire pour animaux est enrobé d'hydroxypropylméthylcellulose, d'hydroxyéthylcellulose ou de méthylcellulose.

10. Procédé selon les revendications 7 à 9, caractérisé en ce que le polymère est déposé sous forme d'une solution ou d'une suspension à 1 à 12%, de préférence à 5 à 7%.

11. Procédé selon les revendications 7 à 10, caractérisé en ce qu'on dépose 1 à 30%, de préférence 5 à 20% du polymère, par rapport à la matière de départ.

12. Procédé selon les revendications 7 à 11, caractérisé en ce que l'additif alimentaire pour animaux devant être enrobé d'un polymère est constitué par 5 à 40% en poids de bacitracine de zinc et 60 à 95% en poids d'une substance support, de préférence par 15 à 25% en poids de bacitracine de zinc et 75 à 85% en poids d'une substance support.

13. Utilisation d'un additif alimentaire pour animaux selon les revendications 1 à 7 pour l'amélioration de l'exploitation de l'alimentation des animaux lors de l'engraissement des animaux.

14. Utilisation en tant qu'additif alimentaire pour animaux d'une préparation à base de bacitracine de zinc munie d'un enrobage de polymère selon les revendications 1 à 7.